# EUROPEAN PATENT SPECIFICATION

(11) **EP 3 680 768 B1**
(45) Date of publication and mention of the grant of the patent: **19.11.2025**
(21) Application number: 19150775.5
(22) Date of filing: 08.01.2019
(51) Int. Cl.: G06F 3/12

(54) **RECOVERY OF A PARTIALLY DAMAGED NESTED JOB**
WIEDERHERSTELLUNG EINES TEILWEISE BESCHÄDIGTEN GESCHACHTELTEN AUFTRAGS
RÉCUPÉRATION D'UNE TÂCHE IMBRIQUÉE PARTIELLEMENT ENDOMMAGÉE

(43) Date of publication of application: 15.07.2020
(73) Proprietor: Canon Production Printing Holding B.V., 5914 HH Venlo (NL)
(72) Inventor: VOUHE, Benjamin, 5914 CA Venlo (NL)
(74) Representative: Canon Production Printing IP Department

(56) References cited:
- US-A1- 2012 081 726
- US-A1- 2016 231 966

## Description

### FIELD OF THE INVENTION

The present invention is related to a method of recovering a nested printing job, a respective printing controller, printing system, computer program product, data storage medium and data stream.

### BACKGROUND ART

A Raster Image Processor (RIP) is a component used in a printing system which produces a raster image also known as a bitmap. A respective printing job is called Raster Image Printing (RIP) job. Said bitmap produced by a RIP (device) or printed in a RIP job is used by a later stage of the printing system to produce the printed output. The input to a RIP may be a page description in a high-level page description language (PDL) such as PostScript, PDF, XPS or another bitmap of higher or lower resolution than the printing system.

A RIP can be implemented either as a software component of an operating system or as a firmware program executed on a microprocessor inside a printing system. For high-end typesetting standalone hardware RIPs are sometimes used. A RIP job comprises and a RIP (device) implements three steps: interpretation, rendering and screening although it is not uncommon that the screening step is performed by another device in the printing system than the RIP. Interpretation is the stage where the supported PDLs are translated into a private internal representation of each page. Most RIPs process pages serially so the current machine state is only for the current page, i.e. one page at once.

Once a page has been output the page state is discarded to ready it for the next page. Rendering is the process through which the private internal representation is turned into a continuous tone bitmap. RIPs, interpretation and rendering are frequently done together. In order to print, a continuous-tone image is converted during screening into a halftone (pattern of dots). Two screening methods or types are Amplitude Modulation (AM) screening and stochastic or Frequency Modulation (FM) screening. In AM screening dot size varies depending on object density-tonal values (dots are placed in a fixed grid). In FM screening dot size remains constant and dots are placed with varying distance to create darker or lighter areas of the image (dot placement is precisely controlled by sophisticated mathematical algorithms).

Especially in commercial printing where wide format printing systems are employed to produce printouts of several meters length multiple printing jobs (e.g. multiple images like PDF files or the like) are grouped together or nested into one single printing job. Thereby, the individual images can be precisely positioned next to each other in order to save printing media (e.g. sheets or web of paper and the like) and, further, complex trim or cut marks can be added. This one single printing job is then converted into one single raster image by the RIP, so called ripping. Note that any reference to paper in this application should be understood to mean any suitable printing media.

If an error happens while printing this nested RIP job that requires the printing system to stop the nested RIP job, the whole nested printing job needs to be recovered at the beginning, because the multiple ripped images are treated as one individual image. This leads, especially near the end of a big nested RIP job, to an enormous loss of printing media, ink and time.

US patent application published under number US 2016/231966 A1 discloses printing nested images wherein each individual image is separately ripped by the RIP. In order to be able to recover from a print error during printing nested images, this publication discloses lining up blanks between consecutive images to force "common blanks" between nested images that extend over the full width of the printing media.

It is known to nest pre-print commands for pre-processing functions, print data and post-print commands for post-processing functions into a single data stream that is provided from a host processor to the printing system. The terms "pre-processing functions" and "post-processing functions" relate to the processing of printing media that is feeding into, or flowing out of, a printing system. Examples of such functions are hole punching, bursting, cutting and shrink wrapping, also known generally as advanced finishing functions.

Further it is known to minimize white spaces or white lines in the nested job in order to save media, time and memory space.

### SUMMARY OF THE INVENTION

The present invention has the object to recover a partially damaged nested job in case of an error such that an already finished printout is not completely lost. Thereto, a method according to independent claim 1 and a printing system according to the further independent claim are provided. Further refinements of the present invention are subject of the respective dependent claims.

According to a first aspect of the present invention a method of recovering a nested printing job according to claim 1 is provided.

According to a second aspect of the present invention, a printing controller is arranged and configured for implementing a method according to an embodiment of the first aspect of the present invention, in particular for:
- determining possible recovery points for the nested printing job;
- identifying secured recovery points within the possible recovery points;
- selecting one secured recovery point when the nested printing job stops due to an error;
- resuming the nested printing job at the selected recovery point.

The printer controller may be realized in hardware, such as a circuit or a printed circuit board and/or comprising transistors, logic gates and other circuitry. Additionally or alternatively, the printer controller may be at least partially realized in terms of software. Accordingly, the printer controller may comprise, or be operatively coupled to, a processor and a memory storing a software or a firmware that is executed by the processor to perform the functions of the printer controller. Signals may be received by an input interface of the printer controller and signals that the processor of the printer controller creates may be outputted by an output interface of the printer controller. The printer controller may be implemented, at least partially, as a microcontroller, an ASIC, an FPGA and so on.

According to a third aspect of the present invention, a printing system for printing a nested printing job according to claim 10 is provided.

In other words, the printing system may be arranged and configured for implementing a method according to an embodiment of the first aspect of the present invention.

According to a fourth aspect of the present invention, a computer program product comprises executable code configured to, when executed, perform the method according to an embodiment of the first aspect of the present invention.

According to a fifth aspect of the present invention, a non-transitory computer-readable data storage medium comprises executable code configured to, when executed, perform the method according to an embodiment of the first aspect.

A nested printing job includes a multitude of printing jobs. The printing jobs included in the nested printing job may comprise images of different size content and colour coded in different PDLs (PostScript, PDF, XPS or the like). In the nested printing job differently sized images of the included jobs are advantageously positioned efficiently such that media (sheets of paper, web of paper etc.) and time are saved.

Between the different images the possible recovery points can be located. A possible recovery point is a coordinate in the paper direction or printing direction or printout direction at which the nested printing job can be stopped and later resumed without any individual image of the nested printing job being unprinted or only partially printed. For example, a recovery point is a coordinate in paper direction where along the width of the paper, perpendicular to the paper direction, no individual image of the nested printing job is present. In other words, at a possible recovery point no individual image of the nested job starts, is present or ends, but all the individual images either ended before this coordinate (already printed) or start after this coordinate (not yet printed).

It should be noted that where the present application refers to a media direction or paper direction, a printing direction should be understood. In sheet fed, web fed, or roll fed printers the media is moved along an image forming unit. In a flatbed printer the media is typically held stationary and the image forming unit is moved over the media by moving a gantry holding the image forming unit (primary movement). Furthermore, it should be noted that in printers that do not have a media-wide image forming unit, the image forming unit makes an additional secondary movement relative to the media scanning the width of the media to be able to deposit marking material over the full width of the media (printing a single-pass or multi-pass swath) for example by moving a carriage holding the image forming unit along the gantry. Furthermore, the width of the media does not necessarily mean the shortest of the two dimensional sizes of media. Length and longitudinal direction refer to the printing direction (primary direction), whereas width and transverse direction refer to the direction perpendicular to the printing direction (secondary direction), for example the scanning direction of a carriage along the gantry.

In the step of determining the possible recovery points all the possible recovery points can be automatically detected and stored. The automatic detection can be based on the data of the nested printing job. The automatic detection can also be effected by an image recognition device while the nested printing job is processed (on the fly), e.g. by means of an image sensor like a camera and a respective image analysis algorithm detecting the individual images of the nested printing job.

Once a possible recovery point is detected, the possible recovery point is stored for later usage in case an error in the nested printing job occurs. The possible recovery points can be stored in a storage. The storage can be a ring buffer, where, each time a new possible recovery point is stored, the oldest possible recovery point is overwritten with the new possible recovery point. Optionally, only the latest possible recovery point is stored, such that each time a new possible recovery point is detected, the preceding recovery point is overwritten with the new possible recovery point.

While the nested printing job is executed the possible recovery points are in parallel checked regarding whether the nested printing job could (already) be resumed at the respective recovery points or not (yet). The printing system provides exact position of the printing medium and the current progress of the nested printing job is known. Based on the current position of the printing medium and/or the current progress of the nested printing job, consequently, for each possible recovery point it can be determined whether the current coordinate of the nested printing job is before or after the respective possible recovery point. If the possible recovery point is before or at the current coordinate (downstream) in paper direction, then the recovery point could be used and is identified as secured recovery point. If the possible recovery point is after the current coordinate (upstream) in paper direction, then the recovery point could not yet be used and is not identified as secured recovery point yet.

If an error in the nested printing job occurs and the printing job has to stop, one of the secured recovery points is selected for resuming the nested printing job. The one secured recovery point can be automatically selected. For example the last secured recovery point, which has been identified last during the progress of the nested printing job, could be automatically selected.

As soon as the error is rectified and the cause of the error is eliminated the nested printing job is recovered at the selected recovery point. Instead of having to start the whole nested printing job again from the very beginning, the nested printing job is recovered at the selected (and secured) recovery point such that at least a part of the already printed printing output can be used and does not have to be disregarded. Thereto the printing controller of the printing system sends the location of the selected recovery point to the printing engine that will resume the part of the printing job at or directly after the selected recovery point. Optionally, the selected, but also all the secured and/or all the possible recovery points can be sent to the printing engine via a dedicated protocol.

Alternatively, the possible recovery points can be sent in parallel to sending the data to be printed to the printing engine. The identifying of secured recovery points and the selecting of one of the secured recovery points can then be executed by the printing engine.

The determining of recovery points as well as identifying secured recovery points may be performed before printing is started, but may alternatively be performed parallel to the printing process as well as only after an error has occurred and error recovery is to be initiated.

Due to the recovery of an erroneous and stopped nested printing job at a (selected) recovery point instead of at the beginning of the nested printing job, media, ink and time can be efficiently saved. This enables a faster recovery and completion of a stopped erroneous nested printing job and reduces the accruing costs in case of an error in the nested printing job.

According to a refinement of the present invention the step of determining comprises automatic determining of the possible recovery points based on a raster image file of the nested printing job.

In case the nested printing job is a Raster Image Printing (RIP) job, the single printing jobs are first nested into one nested printing job and then ripped such that one raster image file for the nested RIP job is created. The raster image file contains all data of the nested RIP job in form of colour and brightness information for each point referenced in two dimensional coordinates. Determining of the possible recovery points can be effected by automatic analysis of the raster image file. The borders of the individual images of the nested RIP job can be automatically recognised and based on the information of the borders of the individual images the possible recovery points can be automatically determined.

Processing a raster image file of a nested RIP job enables a particularly easy and effective implementation of the steps of determining and identifying such that recovery of an erroneous stopped nested RIP job can be effected very easy, effective and cost-efficient.

According to a refinement of the present invention in the step of determining possible recovery points white bands are detected as possible recovery points.

Between the individual images of the nested printing (RIP) job white bands exist, typically for cutting purposes. A white band or white space is an area where no image is being printed on the printing media. When the single printing jobs (images) are nested or grouped together, respectively, into one nested image, at each border of the individual images to an adjacent individual image and optionally to the border of the printing media a white band is introduced. For this invention only vertical white bands are regarded as white bands, where a vertical white band is a white band that has a length in paper direction that is smaller than its width in the perpendicular direction to the paper direction. More particularly, vertical means perpendicular to a print direction. Particularly, in a roll-to-roll printer vertical is perpendicular to the media transport direction and in a flatbed printer vertical is perpendicular to the movement direction of the gantry, or in the particular case of a scanning flatbed printer parallel to the scanning motion of the carriage moving along the gantry.

Preferably, the length of a (vertical) white band in paper direction is equal to or less than 10%, more preferably equal to or less than 1% and most preferably equal to or less than 0.1% of the width of the (vertical) white band in the perpendicular direction to the paper direction. The white bands in the nested printing job can be automatically detected in the step of determining the possible recovery points. In case a white band is detected, the recovery point or in other words the coordinate in paper direction where the nested printing job could be recovered in case of an error during processing of the nested printing job can be set to any position located in the white band, for example to the beginning of the white band or to the middle of the white band or to the end of the white band in paper direction.

White bands are a particularly easy to determine possible recovery point such that an erroneous stopped nested printing job can be very effectively recovered at a white space.

According to a further refinement of the present invention the step of determining possible recovery points comprises detecting finishing marks such as cut marks or cut paths as possible recovery points. Typically finishing marks are printed in the white space around the actual images such as the white bands. Specifically cut marks and cut paths define points or areas on the printing media where images will eventually be separated from each other anyway. Therefore, these point or areas are good candidates for recovery points.

According to a refinement of the present invention the step of identifying secured recovery points comprises automatic identifying of the secured recovery points based on a present position of a printing medium.

The step of identifying secured recovery points can be automatized. The (automatically) determined possible recovery points are automatically identified based on the progress of the nested printing job. Based on the present position of the printing medium, which can be provided by the printing engine of the printing system, the possible recovery points are automatically checked whether they are located before (downstream), at or after (upstream) of the present position of the printing medium in paper direction. If a possible recovery point is located before or at the present position of the printing medium, then this possible recovery point is automatically identified as secured recovery point.

For example, the file of a nested RIP job can be analysed for white bands that qualify as possible recovery points in the step of (automatic) determining the possible recovery points. Then during progress of the nested RIP job the present position provided by the printing engine of the printing system can be used to automatically identify secured recovery points which are at the coordinates in paper direction of (the beginning, middle or end of) the white bands, which have already been output from the printing system.

The step of automatic identifying of the last recovery point is a particular effective and yet simple way of enabling recovery of a stopped erroneous nested printing job, especially, when the step of determining the possible recovery points is also executed automatically.

According to a refinement of the present invention the step of selecting one secured recovery point comprises automatic selecting of one secured recovery point based on a last secured recovery point.

After the secured recovery points have been identified, always the last secured recovery point that has been identified is automatically selected as the one secured recovery point. The last secured recovery point that is located before or at the present position of the printing medium in paper direction is identified as the last recovery point and selected as the one secured recovery point that will be used in case recovering of the nested printing job should be necessary.

Automatically selecting the secured recovery point as last recovery point which has been identified as last secured recovery point is a particular simple and effective way of providing for a suitable recovery point for recovering a stopped erroneous nested printing job.

According to a refinement of the present invention the method further comprises the step of:
- marking of the secured recovery points on the printing medium of the nested printing job.

The step of selecting one secured recovery point comprises optional optical selecting of the one secured recovery point based on the marked recovery points. The automatic selecting can be overruled by the optical selecting.

In the step of marking the secured recovery points, the possible recovery points are marked as soon as they are identified as secured recovery points on the printing medium. The secured recovery points can be marked in a form readable by a human and/or in a form readable by machines. For example a certain type of line (dashed etc.) can be printed at a secured recovery point along the width of a corresponding white band in a direction perpendicular to the paper direction. Further, the secured recovery points can be consecutively numbered. Alternatively or additionally, the secured recovery points can be marked with a machine readable mark such as a QR-code.

Optionally, the marked recovery points are optically selected. In case the marks are readable by humans, the optically selecting is executed by a human choosing an appropriate secured recovery point as the one secured recovery point based e.g. on the numbering of the recovery points. In case the marks are readable by a machine, the optically selecting is executed by a machine, e.g. QR-codes can be read by a scanner like a camera of a smartphone and thereby be selected as the one secured recovery point. In case, an automatic selecting of the one secured recover point was executed, the optical selecting overrules the automatic selecting and the secured recovery point selected as the one secured recovery point by the optical selecting replaces the automatically selected one secured recovery point.

By marking the secured recovery points such that they can be optically selected by a human and/or by a machine an additional selection mechanism is provided. With this additional degree of freedom, the whole recovering method is more flexible and adaptable to special circumstances.

Note that not only secured recovery points may be marked, but any recovery point. This is useful in the case of T-shaped white bands as described further on, as these recovery points are not immediately secured when being printed.

According to a refinement of the present invention the step of identifying comprises optional manual identifying of the last recovery point based on manual entering the last recovery point into a printing controller. The automatic identifying and/or optical identifying can be overruled by the manual identifying.

The one secured recovery point that will be used for recovering a stopped erroneous nested printing job can be manually selected by entering the specific recovery point (coordinate in paper direction) by hand. Thereto a specific coordinate in paper direction resembling the manually selected recovery point can be entered into the printing system (either the printing controller or the printing engine) via a User Interface (UI) of the printing system. In case the one secured recovery point has been manually and/or optically selected beforehand, the manual selecting overrules the manual and/or optical selecting, wherein the manually or optically selected one secured recovery point is replaced by the manually selected recovery point.

The possibility to manually select one recovery point for recovering a stopped erroneous nested printing job adds further degree of freedom for adapting the recovering depending on present circumstances.

According to a refinement of the present invention in the step of determining possible recovery points white bands of at least 10 pixel, preferably of at least 15 pixel and most preferably of at least 20 pixel length in a paper direction (or printing direction or printout direction) are detected as possible recovery points and/or white bands of at least 2mm [Millimetre], preferably of at least 5mm and most preferably of at least 10mm length in the paper direction are detected as possible recovery points.

In that only white bands of a certain minimum length in the paper direction are used as possible recovery points it is provided for a more reliable and failsafe recovering based on the recovery points.

According to the present invention in the step of determining possible recovery points white bands across multiple blocks are detected as possible recovery points.

Here, a possible recovery point is defined as a coordinate in paper direction where in one section along the width of the paper, namely in a first block, at least one individual image of the nested printing job is already printed and at least one individual image of the nested printing job has not yet been printed and possibly in one or more sections along the width of the paper, namely in further blocks adjacent to the first block in the vertical direction perpendicular to the paper direction, one or more individual images of the nested printing job are presently being printed. The first block may at certain coordinates in the paper direction span the whole width of the printing medium. Optionally, the first block must have at least a predetermined minimum width, wherein the predetermined width is preferably 10% [Per cent] of the width of the printing medium, more preferably 25% of the width of the printing medium and most preferably 50% of the width of the printing medium. Consequently when there is a T-shaped white band present, also the coordinate in paper direction of the vertical part in the direction perpendicular to the paper direction of this T-shaped white band can be used as possible recovery point. However, such secured recovery point based on a T-shaped white band can only be identified and used as secured recovery point once the image in the at least one further block adjacent to the first block in vertical direction, in which said recovery point is located in, is completely printed.

Thereby, recovering where long individual images, that have a relatively long length in the paper direction, and short individual images, that have a relatively short length in the paper direction, are printed in parallel to each other, the nested printing job can be recovered efficiently.

According to a refinement of the present invention in the step of determining possible recovery points a location of the possible recovery points is made persistent as offset from a leading edge.

The possible recovery points are defined as coordinates in the paper direction where the paper direction has its origin at the leading edge of the printing medium.

Defining the position of the possible recovery points as offset from the leading edge is an especially easy and convenient way of determining the position of recovery points for recovering the nested printing job in case of an error.

The present invention and its technical field are subsequently explained in further detail by an exemplary embodiment shown in the drawing. Equal reference signs refer to the same objects, such that explanations from other figures may be supplementally used.
- Fig. 1: shows a schematic flow chart of an exemplary embodiment of the first aspect of the present invention.
- Fig. 2: shows a schematic illustration of possible recovery points on a printing medium according to the present invention.
- Fig. 3: shows a schematic illustration of printouts after a nested printing job is recovered at one secured recovery point.
- Fig. 4: shows a schematic view of a printing system according to an embodiment of the third aspect of the present invention as well as a printing controller according to an embodiment of the second aspect of the present invention.
- Fig. 5: shows a schematic block diagram illustrating a computer program product according to an embodiment of the fourth aspect of the present invention.
- Fig. 6: shows a schematic block diagram illustrating a non-transitory computer-readable data storage medium according to an embodiment of the fifth aspect of the present invention.

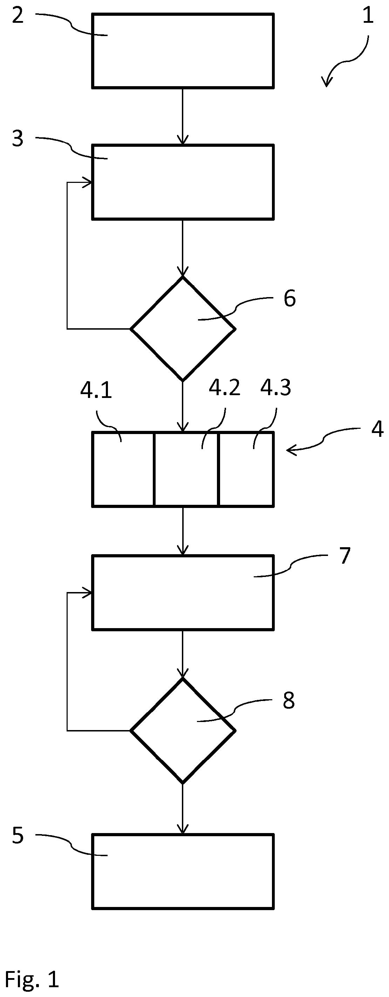

In Fig. 1 an embodiment of a method 1 of recovering a nested printing job is schematically depicted.

During a nested Raster Image Printing (RIP) job possible recovery points are determined in a step of determining 2 possible recovery points. In a file of the nested RIP job white bands are automatically detected and determined as possible recovery points. A white band is an area where no coloured pixel is present. Such areas mark the space between two consecutive individual images of the nested RIP job. Here, only vertical white bands are determined as possible recovery points. A vertical white band is an area of white pixels that has a length in a paper direction or printing direction or printout direction that is smaller than its width in a direction perpendicular to the paper direction.

Additionally, a possible recovery point is defined as a coordinate in paper direction where in one section along the width of the paper, namely in a first block, at least one individual image of the nested printing job is already printed and at least one individual image of the nested printing job has not yet been printed and possibly in one or more sections along the width of the paper, namely in further blocks adjacent to the first block in the vertical direction perpendicular to the paper direction, one or more individual images of the nested printing job are presently being printed.

The first block may span the whole width of the printing medium. Further, the first block must have at least a predetermined minimum width, wherein the predetermined width is 25% of the width of the printing medium. Consequently when there is a T-shaped white band present, also the coordinate in paper direction of the vertical part in the direction perpendicular to the paper direction of this T-shaped white band can be used as possible recovery point. The determined possible recovery points are stored for later use.

In a step of identifying 3 secured recovery points the position or coordinate in paper direction of each of the determined possible recovery points is compared with a current coordinate in paper direction of the printing medium during progress of the nested RIP job. If the possible recovery point is before or at the current coordinate (downstream) in paper direction, then the recovery point could be used and is identified as secured recovery point. If the possible recovery point is after the current coordinate (upstream) in paper direction, then the recovery point could not yet be used and is not identified as secured recovery point yet.

However, possible recovery points that are based on a T-shaped white band can only be identified and selected as secured recovery points as soon as any individual image in a further block adjacent to the respective white band in vertical direction has been completely printed.

When a possible recovery point is identified as secured recovery point, said secured recovery point is marked on the printing medium with a consecutive numbering and a unique QR-code (said recovery points based on a T-shaped white band are nevertheless marked as soon as they pass the current position of the printing medium in paper direction although they cannot immediately be selected as secured recovery points).

In case an error during progress of the nested printing job occurs, in the step of selecting 4 one secured recovery point the one secured recovery point is selected from all the secured recovery points identified up to now. The step of selecting comprises an automatic selecting 4.1, an optical selecting 4.2 and a manual selecting 4.3 of the one secured recovery point. In automatic selecting 4.1 of the one secured recovery point, always the last secured recovery point, which has been identified as secured recovery point at last and is, thus, next to the current position/coordinate in paper direction of the printing medium, is automatically selected as the one secured recovery point. Note that in the case of recovery points identified by finding white bands that do not cover the full paper width (T-shaped whitebands), the last recovery point that has already been printed is not necessarily a secured recovery point.

Optionally, the one secured recovery point can be optically selected by scanning the respective QR-code on the printing medium with the camera of a smartphone and sending the information about the optically selected secured recovery point to a printing controller of a respective printing system which has been stopped due to the error in the nested RIP job. Any automatically selected secured recovery point (automatic selecting 4.1) is replaced with the optically selected secured recovery point as the one secured recovery point.

Further, the one secured recovery point can also be manually selected in manual selecting 4.3 of the one secured recovery point. Thereto, one of the secured recovery points is manually selected based on its number (consecutive numbering) or based on its coordinate in paper direction. A user manually enters the number/coordinate in paper direction of the desired secured recovery point in a User Interface (UI) of the printing system. The manually selected recovery point replaces any optically or automatically selected recovery point as the one selected recovery point.

After the error has been rectified, the nested RIP job is resumed at the selected one secured recovery point in the step of resuming 5 the nested RIP job. By not having to restart the whole nested RIP job, printing medium, ink and time can be saved.

The nested RIP job progressing on the printing system is permanently observed for possible errors in a step of observing 6 the nested printing job. Only in case an error is detected and the nested RIP job has to be stopped the method 1 advances to the step of selecting 4 one secured recovery point.

After the one secured recovery point has been selected and the error of the nested printing job or the printing system has been rectified in a step of rectifying 7 the error, and a check 8 whether the rectifying was successful is positive, the nested printing job is resumed in the step of resuming 5 the nested printing job.

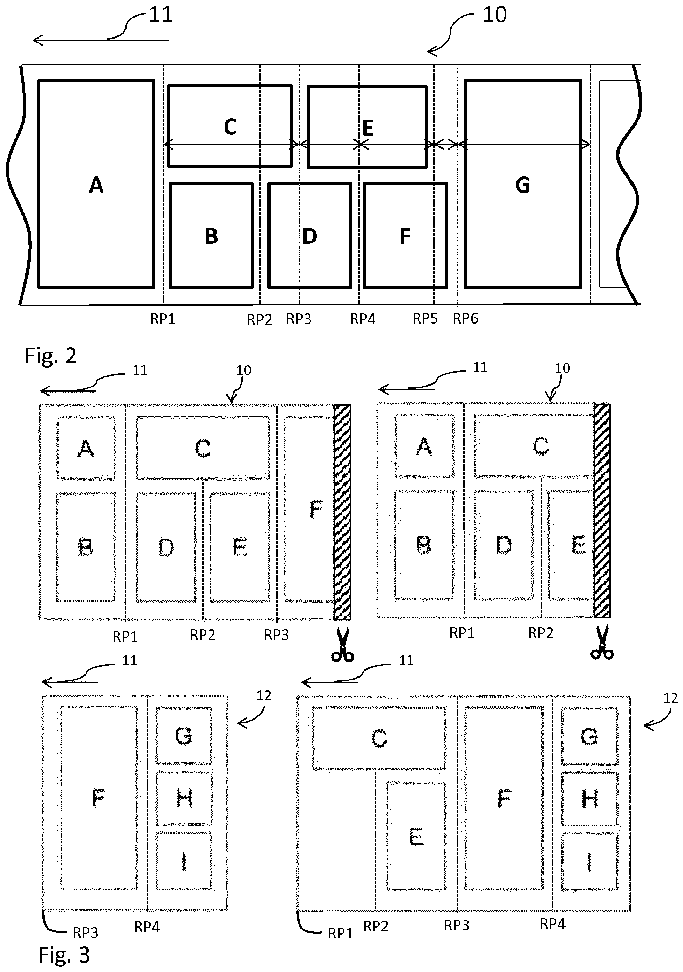

In Fig. 2, a schematic illustration of possible recovery points on a printing medium 10 is depicted. Several individual images A - G are printed on the printing medium 10 (e.g. sheet of paper, web of paper etc.). Here, the images B, D and F are printed in a first block along the printing medium and the images C and E are printed in a further block vertically above the first block.

The printing medium is printed by moving the paper in a direction 11. After the individual image A has been completely printed, the secured recovery point RP1 is identified and marked on the printing medium with a consecutive number and a QR-code (not depicted). In the same manner, the secured recovery points RP2 - RP6 are identified and marked after the respective individual image B - F is completely printed. RP5 is however only secured after RP6 is also secured and hence not marked on the printing medium. Here, two T-shaped white bands are determined as possible recovery points RP2 and RP4, respectively for the images in the first block.

In case an error in the nested RIP job occurs while either image B or C is not completely printed (section between RP1 and RP 3) the nested RIP job can be resumed/recovered at the recovery point RP1. After the image C has been completely printed, the nested RIP job can be resumed/recovered at the recovery point RP2 in case an error in the nested RIP job occurs while Image D is not completely printed (section between RP3 and RP4). After the image D has been completely printed, the nested RIP job could be resumed at the recovery point RP3 in case the nested RIP job has an error while the image E is not completely printed (section between RP4 and RP5).

In case an error occurs in the nested RIP job while the image F is not completely printed but the image E has already been completely printed (section between RP5 and RP6) the nested Rip job could be resumed/recovered at the recovery point RP4. After the image F has completely been printed and an error occurs in the nested RIP job while the image G is currently being printed, the nested RIP job could be recovered at the recovery point RP6. The possible recovery point RP5 will not be automatically selected here, because it is not a secured recovery point until also RP6 is a secured recovery point. Also no optical selection is possible, as no marking with a QR-code is present for the possible recovery point RP5. Yet, the recovery point RP5 or rather its coordinate in paper direction could be manually selected by manually entering the respective coordinate via the UI of the printing system.

In Fig. 3, a schematic illustration of printing media (10, 12) after a nested printing job is recovered at one secured recovery point is depicted. The two left-hand pictures illustrate how the printing of the nested RIP job is resumed (lower left picture) on a printing medium 12 of the recovered nested printing job at recovery point RP3 after an error (shaded area) has occurred while image F was currently being printed on the printing medium 10 (upper left picture). The two right-hand pictures illustrate how the nested RIP job is resumed (lower right picture) on the printing medium 12 of the recovered nested printing job at RP1 (not RP2, as image C is not completely printed, yet) after an error has occurred while printing image E and image C were being printed on the printing medium 10 (upper right picture).

Note that as the printing of image D was completed when the error occurred, the printing of image D adjacent to image C could be optionally suppressed, for example by suppressing depositing marking material while the image forming unit moves through the area of image D. This would lead to additional saving of ink (and possibly printing media if the blank part could be reused for other purposes).

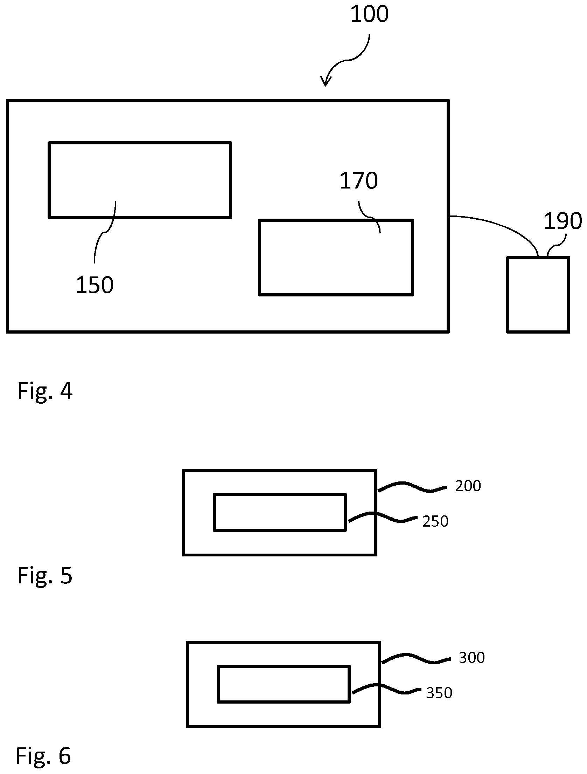

In Fig. 4 an embodiment of a printing system 100 arranged and configured for implementing the method of recovering a nested printing job according to Fig. 1 is schematically depicted. The printing system 100 comprises a printing controller 150 arranged and configured to implement the method according to Fig. 1.

A printing engine 170 is configured to execute the nested RIP job and to provide the current position/coordinate in paper direction of the printing medium. A user can interact with the printing system 100 via the UI 190 and also manually select one secured recovery point in case an error occurs in the nested RIP job. The printing system 100 further comprises a storage (not depicted) for storing the nested printing job and the determined possible recovery points and/or the identified secured recovery points as well as the selected one secured recovery point.

Fig. 5 shows a schematic block diagram illustrating a computer program product 200 according to an embodiment of the fourth aspect of the present invention. The computer program product 200 comprises executable code 250 configured to, when executed, perform the method according to an embodiment of the first aspect, e.g. as described with respect to the printing system 100, or the method described with respect to any of Fig. 1 to Fig. 3 and/or according to any of the variants and modifications of the printing system 100, the printing controller 150 and/or of the method described herein.

Fig. 6 shows a schematic block diagram illustrating a non-transitory computer-readable data storage medium 300 according to an embodiment of the fifth aspect of the present invention. The non-transitory computer-readable data storage medium 300 comprises executable code 350 configured to, when executed, perform the method according to an embodiment of the first aspect, e.g. as described with respect to the printing system 100, the printing controller 150, or the method described with respect to any of Fig. 1 to Fig.3 and/or according to any of the variants and modifications of the printing system 100, the printing controller 150 and/or of the method described herein.

The non-transitory computer-readable data storage medium 300 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments have been illustrated and described herein, it will be appreciated by those of ordinary skill in the art that a variety of alternate and/or equivalent implementations exist. The foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects. In the context of the present description and claims the conjunction "or" is to be understood as including ("and/or") and not exclusive ("either ... or").

## Claims

1. A method (1) of recovering a nested printing job, the nested printing job comprising multiple images (A - I) to be printed on a printing medium (10), ripped such that one raster image file for the nested RIP job is created, the method comprising the steps of:
- determining (2) possible recovery points (RP1 - RP6) for the nested printing job;
- identifying (3) secured recovery points (RP1 - RP4, RP6) within the possible recovery points (RP1 - RP6);
- selecting (4) one secured recovery point when the nested printing job stops due to an error; and
- resuming (5) the nested printing job at the selected recovery point
**characterised in that**
a possible recovery point (RP2 - RP4) is determined by automatically detecting white bands in the file of the nested RIP job, and is a coordinate in the media direction where in one section along the width of the medium (10), namely in a first block, at least one individual image (B - E) of the nested printing job is already completely printed and at least one individual image (D - F) of the nested printing job has not yet been completely printed and in one or more sections along the width of the paper, namely in further blocks adjacent to the first block in the vertical direction perpendicular to the paper direction, one or more individual images of the nested printing job are presently being printed, and wherein
the secured recovery points are identified by comparing the coordinate in the media direction of each of the determined possible recovery points with a current coordinate in paper direction of the printing medium during progress of the nested RIP job,
wherein the possible recovery point is determined to be before or at the current coordinate in paper direction.

2. The method (1) according to claim 1, wherein the step of identifying (3) secured recovery points (RP1 - RP4, RP6) comprises automatic identifying of the secured recovery points (RP1 - RP4, RP6) based on a present position of a printing medium (10).

3. The method (1) according to claim 2, wherein the step of selecting (4) one secured recovery point comprises automatic selecting (4.1) of one secured recovery point based on a last secured recovery point.

4. The method (1) according to any of the preceding claims, further comprising the step of:
- marking of the secured recovery points (RP1 - RP4, RP6) on the printing medium (10) of the nested printing job,
wherein the step of selecting (4) one secured recovery point comprises optional optical selecting (4.2) of the last recovery point based on the marked recovery points, wherein, when based on claim 3, the automatic selecting (4.1) is overruled by the optical selecting (4.2).

5. The method (1) according to any of the preceding claims, wherein the step of selecting (4) one secured recovery point comprises optional manual selecting (4.3) of the last recovery point based on manual entering the last recovery point into a printing controller (150), wherein, when based on claim 3, the automatic selecting (4.1) is overruled by the manual selecting (4.3) and, when based on claim 4, the automatic and/or optical selecting (4.1, 4.2) is overruled by the manual selecting (4.3).

6. The method (1) according to any of claims 2 to 5, wherein in the step of determining (2) possible recovery points (RP1 - RP6) white bands of at least 10 pixel, preferably of at least 15 pixel and most preferably of at least 20 pixel length in a paper direction (11) are detected as possible recovery points and/or white bands of at least 2mm [Millimetre], preferably of at least 5mm and most preferably of at least 10mm length in the paper direction (11) are detected as possible recovery points (RP1 - RP6).

7. The method (1) according to any of the preceding claims, wherein in the step of determining (2) possible recovery points (RP1 - RP6) white bands across multiple blocks are detected as possible recovery points (RP1 - RP6).

8. The method (1) according to any of the preceding claims, wherein in the step of determining (2) possible recovery points (RP1- RP6) a location of the possible recovery points (RP1 - RP6) is made persistent as offset from a leading edge.

9. A printing controller (150) arranged and configured for implementing the method (1) of recovering a nested printing job according to any of claims 1 to 8.

10. A printing system (100) for printing a nested printing job comprising printing multiple images (A - I) on a printing medium (10), ripped such that one raster image file for the nested RIP is created, the printing system (100) further comprising a printing controller (150) and a printing engine (170), which printing controller (150) is arranged and configured for:
- determining possible recovery points (RP1 - RP6) for the nested printing job;
- identifying secured recovery points (RP1 - RP4, RP6) within the possible recovery points (RP1 - RP6);
- selecting one secured recovery point when the nested printing job stops due to an error; and
- resuming the nested printing job at the selected recovery point
**characterised in that**
a possible recovery point (RP2 - RP4) is determined by automatically detecting white bands in the file of the nested RIP job, and is a coordinate in the media direction where in one section along the width of the medium (10), namely in a first block, at least one individual image (B - E) of the nested printing job is already completely printed and at least one individual image (D - F) of the nested printing job has not yet been completely printed and in one or more sections along the width of the paper, namely in further blocks adjacent to the first block in the vertical direction perpendicular to the paper direction, one or more individual images of the nested printing job are presently being printed, and wherein
the secured recovery points are identified by comparing the coordinate in the media direction of each of the determined possible recovery points with a current coordinate in paper direction of the printing medium during progress of the nested RIP job,
wherein the possible recovery point is determined to be before or at the current coordinate in paper direction.

11. The printing system (100) according to claim 10, wherein the printing system (100) is arranged and configured for implementing the method (1) according to any of claims 1 to 8.

12. A computer program product (200) comprising executable program code (250) configured to, when executed, perform the method (1) according to any of claims 1 to 8.

13. A non-transitory, computer-readable data storage medium (300) comprising executable program code (350) configured to, when executed, perform the method (1) according to any of claims 1 to 8.

## Patentansprüche

1. Verfahren (1) zum Wiederherstellen eines verschachtelten Druckauftrags, wobei der verschachtelte Druckauftrag mehrere Bilder (A - I) umfasst, die auf ein Druckmedium (10) gedruckt werden sollen, und so geript werden, dass eine Rasterbilddatei für den verschachtelten RIP-Auftrag erstellt wird, wobei das Verfahren die folgenden Schritte umfasst:
- bestimmen (2) möglicher Wiederherstellungspunkte (RP1 - RP6) für den verschachtelten Druckauftrag;
- identifizieren (3) gesicherter Wiederherstellungspunkte (RP1 - RP4, RP6) innerhalb der möglichen Wiederherstellungspunkte (RP1 - RP6);
- auswählen (4) eines gesicherten Wiederherstellungspunkts wenn der verschachtelte Druckauftrag aufgrund eines Fehlers angehalten wird; und
- wiederaufnehmen (5) des verschachtelten Druckauftrags an dem ausgewählten Wiederherstellungspunkt
**dadurch gekennzeichnet, dass**
ein möglicher Wiederherstellungspunkt (RP2 - RP4) durch automatisches Erkennen weißer Streifen in der Datei des verschachtelten RIP-Auftrags bestimmt wird und eine Koordinate in die Medienrichtung ist, an der in einem Abschnitt entlang die Breite des Mediums (10), nämlich in einem ersten Block, mindestens ein Einzelbild (B - E) des verschachtelten Druckauftrags bereits vollständig gedruckt ist und mindestens ein Einzelbild (D - F) des verschachtelten Druckauftrags noch nicht vollständig gedruckt ist und in einem oder mehreren Abschnitten entlang die Breite des Papiers, nämlich in weiteren Blöcken, die in vertikaler Richtung senkrecht zur Medienrichtung an den ersten Block angrenzen, derzeit ein oder mehrere Einzelbilder des verschachtelten Druckauftrags gedruckt werden, und wobei
die gesicherten Wiederherstellungspunkte durch Vergleichen der Koordinate in die Medienrichtung jedes der bestimmten möglichen Wiederherstellungspunkte mit einer aktuellen Koordinate in die Medienrichtung des Druckmediums während des Fortschreitens des verschachtelten RIP-Auftrags identifiziert werden,
wobei der mögliche Wiederherstellungspunkt vor oder an der aktuellen Koordinate in Medienichtung bestimmt wird.

2. Verfahren (1) nach Anspruch 1, wobei der Schritt des Identifizierens (3) gesicherter Wiederherstellungspunkte (RP1 - RP4, RP6) das automatische Identifizieren der gesicherten Wiederherstellungspunkte (RP1 - RP4, RP6) auf der Grundlage einer aktuellen Position eines Druckmediums (10) umfasst.

3. Verfahren (1) nach Anspruch 2, wobei der Schritt des Auswählens (4) eines gesicherten Wiederherstellungspunkts das automatische Auswählen (4.1) eines gesicherten Wiederherstellungspunkts auf der Grundlage eines letzten gesicherten Wiederherstellungspunkts umfasst.

4. Das Verfahren (1) gemäß einem der vorstehenden Ansprüche, das ferner den folgenden Schritt umfasst:
- Markieren der gesicherten Wiederherstellungspunkte (RP1 - RP4, RP6) auf dem Druckmedium (10) des verschachtelten Druckauftrags,
wobei der Schritt des Auswählens (4) eines gesicherten Wiederherstellungspunkts das optionale optische Auswählen (4.2) des letzten Wiederherstellungspunkts auf der Grundlage der markierten Wiederherstellungspunkte umfasst, wobei, wenn auf Anspruch 3 bezogen, das automatische Auswählen (4.1) durch das optische Auswählen (4.2) außer Kraft gesetzt wird.

5. Verfahren (1) nach einem der vorstehenden Ansprüche, wobei der Schritt des Auswählens (4) eines gesicherten Wiederherstellungspunkts das optionale manuelle Auswählen (4.3) des letzten Wiederherstellungspunkts auf der Grundlage der manuellen Eingabe des letzten Wiederherstellungspunkts in eine Drucksteuerung (150) umfasst, wobei, wenn auf Anspruch 3 bezogen, die automatische Auswahl (4.1) durch die manuelle Auswahl (4.3) außer Kraft gesetzt wird und, wenn auf Anspruch 4 bezogen, die automatische und/oder optische Auswahl (4.1, 4.2) durch die manuelle Auswahl (4.3) außer Kraft gesetzt wird.

6. Verfahren (1) nach einem der Ansprüche 2 bis 5, wobei in dem Schritt des Bestimmens (2) möglicher Wiederherstellungspunkte (RP1 - RP6) weiße Streifen von mindestens 10 Pixeln, vorzugsweise von mindestens 15 Pixeln und am meisten bevorzugt von mindestens 20 Pixeln Länge in einer Medienrichtung (11) als mögliche Wiederherstellungspunkte und/oder weiße Streifen von mindestens 2 mm [Millimeter], vorzugsweise mindestens 5 mm und am bevorzugtesten mindestens 10 mm Länge in Medienrichtung (11) als mögliche Wiederherstellungspunkte (RP1 - RP6) erkannt werden.

7. Verfahren (1) nach einem der vorstehenden Ansprüche, wobei im Schritt des Bestimmens (2) möglicher Wiederherstellungspunkte (RP1 - RP6) weiße Streifen über mehrere Blöcke hinweg als mögliche Wiederherstellungspunkte (RP1 - RP6) erkannt werden.

8. Verfahren (1) nach einem der vorstehenden Ansprüche, wobei im Schritt des Bestimmens (2) möglicher Wiederherstellungspunkte (RP1 - RP6) eine Position der möglichen Wiederherstellungspunkte (RP1 - RP6) als Versatz von einer Vorderkante beibehalten wird.

9. Eine Drucksteuerung (150), die zur Implementierung des Verfahrens (1) zum Wiederherstellen eines verschachtelten Druckauftrags gemäß einem der Ansprüche 1 bis 8 eingerichtet und konfiguriert ist.

10. Ein Drucksystem (100) zum Drucken eines verschachtelten Druckauftrags, der das Drucken mehrerer Bilder (A - I) auf ein Druckmedium (10) umfasst, die so geript werden, dass eine Rasterbilddatei für den verschachtelten RIP erstellt wird, wobei das Drucksystem (100) ferner eine Drucksteuerung (150) und eine Druckvorrichtung (170) umfasst, wobei die Drucksteuerung (150) so angeordnet und konfiguriert ist für:
- das Bestimmen möglicher Wiederherstellungspunkte (RP1 - RP6) für den verschachtelten Druckauftrag;
- das Identifizieren gesicherter Wiederherstellungspunkte (RP1 - RP4, RP6) innerhalb der möglichen Wiederherstellungspunkte (RP1 - RP6);
- das Auswahlen eines gesicherten Wiederherstellungspunkts wenn der verschachtelte Druckauftrag aufgrund eines Fehlers angehalten wird; und
- das Wiederaufnehmen des verschachtelten Druckauftrags an dem ausgewählten Wiederherstellungspunkt
**dadurch gekennzeichnet, dass**
ein möglicher Wiederherstellungspunkt (RP2 - RP4) durch automatisches Erkennen weißer Streifen in der Datei des verschachtelten RIP-Auftrags bestimmt wird und eine Koordinate in die Medienrichtung ist, an der in einem Abschnitt entlang die Breite des Mediums (10), nämlich in einem ersten Block, mindestens ein Einzelbild (B - E) des verschachtelten Druckauftrags bereits vollständig gedruckt ist und mindestens ein Einzelbild (D - F) des verschachtelten Druckauftrags noch nicht vollständig gedruckt ist und in einem oder mehreren Abschnitten entlang die Breite des Papiers, nämlich in weiteren Blöcken, die in vertikaler Richtung senkrecht zur Medienrichtung an den ersten Block angrenzen, derzeit ein oder mehrere Einzelbilder des verschachtelten Druckauftrags gedruckt werden, und wobei
die gesicherten Wiederherstellungspunkte durch Vergleichen der Koordinate in die Medienrichtung jedes der bestimmten möglichen Wiederherstellungspunkte mit einer aktuellen Koordinate in die Medienrichtung des Druckmediums während des Fortschreitens des verschachtelten RIP-Auftrags identifiziert werden,
wobei der mögliche Wiederherstellungspunkt vor oder an der aktuellen Koordinate in Medienrichtung bestimmt wird.

11. Das Drucksystem (100) gemäß Anspruch 10, wobei das Drucksystem (100) so angeordnet und konfiguriert ist, dass es das Verfahren (1) gemäß einem der Ansprüche 1 bis 8 implementiert.

12. Computerprogrammprodukt (200), das einen ausführbaren Programmcode (250) umfasst, der so konfiguriert ist, dass er, bei Ausführung, das Verfahren (1) gemäß einem der Ansprüche 1 bis 8 ausführt.

13. Nichtflüchtiges, computerlesbares Datenspeichermedium (300), das einen ausführbaren Programmcode (350) umfasst, der so konfiguriert ist, dass er, bei Ausführung, das Verfahren (1) gemäß einem der Ansprüche 1 bis 8 ausführt.

## Revendications

1. Procédé (1) de récupération d'une tâche d'impression imbriquée, la tâche d'impression imbriquée comprenant plusieurs images (A à I) à imprimer sur un support d'impression (10), traitée de telle sorte qu'un fichier d'image tramée pour la tâche RIP imbriquée soit créée, le procédé comprenant les étapes suivantes:
- déterminer (2) les points de récupération possibles (RP1 à RP6) pour la tâche d'impression imbriquée;
- identifier (3) des points de récupération sécurisés (RP1 à RP4, RP6) parmi les points de récupération possibles (RP1 à RP6);
- sélectionner (4) un point de récupération sécurisé lorsque la tâche d'impression imbriquée s'arrête en raison d'une erreur; et
- reprendre (5) la tâche d'impression imbriquée au point de récupération sélectionné
**caractérisé en ce que**
un point de récupération possible (RP2 à **RP4)** est déterminé en détectant automatiquement des bandes blanches dans le fichier de la tâche RIP imbriquée, et est une coordonnée dans le sens du support où, dans une section le long de la largeur du support (10), c'est-à-dire dans un premier bloc, au moins une image individuelle (B à E) de la tâche d'impression imbriquée est déjà complètement imprimée et au moins une image individuelle (D à F) de la tâche d'impression imbriquée n'a pas encore été complètement imprimée et dans une ou plusieurs sections le long de la largeur du papier, c'est-à-dire dans d'autres blocs adjacents au premier bloc dans le sens verticale perpendiculaire au sens du papier, une ou plusieurs images individuelles de la tâche d'impression imbriquée sont en cours d'impression, et dans lequel
les points de récupération sécurisés sont identifiés en comparant la coordonnée dans le sens du support de chacun des points de récupération possibles déterminés avec une coordonnée actuelle du support d'impression dans le sens du papier pendant le déroulement de la tâche RIP imbriquée,
dans lequel le point de récupération possible étant déterminé comme étant avant ou au niveau de la coordonnée actuelle dans le sens du papier.

2. Procédé (1) selon la revendication 1, dans lequel l'étape d'identification (3) des points de récupération sécurisés (RP1 à RP4, RP6) comprend l'identification automatique des points de récupération sécurisés (RP1 à RP4, RP6) sur la base d'une position actuelle d'un support d'impression (10).

3. Procédé (1) selon la revendication 2, dans lequel l'étape de sélection (4) d'un point de récupération sécurisé comprend la sélection automatique (4.1) d'un point de récupération sécurisé sur la base d'un dernier point de récupération sécurisé.

4. Procédé (1) selon l'une quelconque des revendications précédentes, comprenant en outre l'étape consistant à:
- marquage des points de récupération sécurisés (RP1 à RP4, RP6) sur le support d'impression (10) de la tâche d'impression imbriquée,
dans lequel l'étape de sélection (4) d'un point de récupération sécurisé comprend la sélection optique facultative (4.2) du dernier point de récupération sur la base des points de récupération marqués, dans lequel, sur la base de la revendication 3, la sélection automatique (4.1) est annulée par la sélection optique (4.2).

5. Procédé (1) selon l'une quelconque des revendications précédentes, dans lequel l'étape de sélection (4) d'un point de récupération sécurisé comprend la sélection manuelle facultative (4.3) du dernier point de récupération sur la base de la saisie manuelle du dernier point de récupération dans une unité de commande d'impression (150), dans lequel, sur la base de la revendication 3, la sélection automatique (4.1) est annulée par la sélection manuelle (4.3) et, sur la base de la revendication 4, la sélection automatique et/ou optique (4.1, 4.2) est annulée par la sélection manuelle (4.3).

6. Procédé (1) selon l'une quelconque des revendications 2 à 5, dans lequel, lors de l'étape de détermination (2) des points de récupération possibles (RP1 à RP6), des bandes blanches d'au moins 10 pixels, de préférence d'au moins 15 pixels et de préférence d'au moins 20 pixels de longueur dans le sens du papier (11) sont détectées comme points de récupération possibles et/ou des bandes blanches d'au moins 2 mm [millimètres], de préférence d'au moins 5 mm et de préférence d'au moins 10 mm de longueur dans le sens du papier (11) sont détectées comme points de récupération possibles (RP1 à RP6).

7. Procédé (1) selon l'une quelconque des revendications précédentes, dans lequel, lors de l'étape de détermination (2) des points de récupération possibles (RP1 à RP6), des bandes blanches s'étendant sur plusieurs blocs sont détectées comme points de récupération possibles (RP1 à RP6).

8. Procédé (1) selon l'une quelconque des revendications précédentes, dans lequel, lors de l'étape de détermination (2) des points de récupération possibles (RP1 à RP6), une position des points de récupération possibles (RP1 à RP6) est rendue persistante en tant que décalage par rapport à un bord avant.

9. Unité de commande d'impression (150) agencé et configuré pour effectuer le procédé (1) de récupération d'une tâche d'impression imbriquée selon l'une quelconque des revendications 1 à 8.

10. Système d'impression (100) destiné à imprimer une tâche d'impression imbriquée comprenant l'impression de plusieurs images (A à I) sur un support d'impression (10), traitée de telle sorte qu'un fichier d'image tramée pour le RIP imbriqué soit créé, le système d'impression (100) comprenant en outre une unité de commande d'impression (150) et un moteur d'impression (170), laquelle unité de commande d'impression (150) est agencé et configuré pour:
- déterminer les points de récupération possibles (RP1 à RP6) pour la tâche d'impression imbriquée;
- identifier des points de récupération sécurisés (RP1 à RP4, RP6) parmi les points de récupération possibles (RP1 à RP6);
- sélectionner un point de récupération sécurisé lorsque la tâche d'impression imbriquée s'arrête en raison d'une erreur; et
- reprendre la tâche d'impression imbriquée au point de récupération sélectionné
**caractérisé en ce que**
un point de récupération possible (RP2 à RP4) est déterminé en détectant automatiquement des bandes blanches dans le fichier de la tâche RIP imbriquée, et est une coordonnée dans le sens du support où, dans une section le long de la largeur du support (10), c'est-à-dire dans un premier bloc, au moins une image individuelle (B à E) de la tâche d'impression imbriquée est déjà complètement imprimée et au moins une image individuelle (D à F) de la tâche d'impression imbriquée n'a pas encore été complètement imprimée et dans une ou plusieurs sections le long de la largeur du papier, c'est-à-dire dans d'autres blocs adjacents au premier bloc dans le sens verticale perpendiculaire au sens du papier, une ou plusieurs images individuelles de la tâche d'impression imbriquée sont en cours d'impression, et dans lequel
les points de récupération sécurisés sont identifiés en comparant la coordonnée dans le sens du support de chacun des points de récupération possibles déterminés avec une coordonnée actuelle du support d'impression dans le sens du papier pendant le déroulement de la tâche RIP imbriquée,
dans lequel le point de récupération possible étant déterminé comme étant avant ou au niveau de la coordonnée actuelle dans le sens du papier.

11. Système d'impression (100) selon la revendication 10, dans lequel le système d'impression (100) est agencé et configuré pour effectuer le procédé (1) selon l'une quelconque des revendications 1 à 8.

12. Produit de programme informatique (200) comprenant un code de programme exécutable (250) configuré pour, lorsqu'il est exécuté, effectuer le procédé (1) selon l'une quelconque des revendications 1 à 8.

13. Support non transitoire d'enregistrement de données, lisible par ordinateur (300) comprenant un code de programme exécutable (350) configuré pour, lorsqu'il est exécuté, effectuer le procédé (1) selon l'une quelconque des revendications 1 à 8.
